# EUROPÄISCHE PATENTSCHRIFT

(11) **EP 1 082 741 B1**
(45) Veröffentlichungstag und Bekanntmachung des Hinweises auf die Patenterteilung: **21.11.2001**
(21) Anmeldenummer: 99932645.7
(22) Anmeldetag: 06.05.1999
(51) Int. Cl.: H01H 13/70, H01H 9/02

(54) **TASTATURGEHÄUSE**
KEYBOARD HOUSING
BOITIER DE CLAVIER

(30) Priorität: 28.05.1998 DE 29809633 U
(43) Veröffentlichungstag der Anmeldung: 14.03.2001
(73) Patentinhaber: Fujitsu Siemens Computers GmbH, 81739 München (DE)
(72) Erfinder: DUBOIS, Dieter, D-86199 Augsburg (DE)
(74) Vertreter: Hermann, Uwe, Dipl.-Ing.
(86) Internationale Anmeldenummer: DE9901369
(87) Internationale Veröffentlichungsnummer: WO9962087

(56) Entgegenhaltungen:
- EP-A1- 0 821 380
- EP-A2- 0 127 164

## Beschreibung

Die Erfindung betrifft ein Tastaturgehäuse gemäß den Merkmalen des Oberbegriffs des Anspruchs 1. Ein derartiges Tastaturgehäuse ist aus EP-A-0 821 380 bekannt.

Bei rastend aneinander befestigten Gehäuseschalen von Tastaturgehäusen, wie sie beispielsweise aus der europäischen Patentanmeldung EP 0 127 164 A2 bekannt sind, und bei denen die gegenseitige Verrastung der beiden Gehäuseschalen ausschließlich auf den Gehäuserand beschränkt ist, besteht die Gefahr, dass sich das Gehäuse im mittleren Bereich durchbiegen kann, so dass sich zwischen Tasten, die an den Randbereichen der Tastatur angeordnet sind, und Tasten im mittleren Bereich, hinsichtlich des Abstandes von Tastenstößel zu Schaltfolie, unzulässige Abweichungen ergeben können.

Aus DE 93 02 846 U1 ist deshalb bereits ein Tastaturgehäuse mit zwei rastend ineinandergreifenden Gehäuseschalen bekannt, bei dem die Bodenschale mehrere räumlich verteilte, senkrecht zur Bodeninnenfläche stehende Raststifte aufweist, die in lochartige Aussparungen in der Gehäuseoberschale rastend einschnappen. Dies bringt zwar die gewünschte Lagefixierung auch im mittleren Bereich des Tastaturgehäuses, muss aber dadurch erkauft werden, dass die Raststifte mit ihren freien Enden aus der Deckfläche der Oberschale heraustreten, und dass über die Aussparungen in der Oberschale Schmutzpartikel in das Innere des Tastaturgehäuses eindringen können mit der Folge, dass die Betriebssicherheit der Tastatur dadurch mehr oder weniger stark beeinträchtigt werden kann.

Der vorliegenden Erfindung liegt nun die Aufgabe zugrunde, ein Tastaturgehäuse der eingangs genannten Art so auszubilden, dass über die gesamte Fläche des Tastaturgehäuses eine gleichmäßige Lagerung der einzelnen Tasten zur Schaltfolie gewährleistet ist, ohne dass die Funktionssicherheit der Tastatur beeinträchtigt wird.

Die Lösung dieser Aufgabe ergibt sich erfindungsgemäß durch die Merkmale des Anspruchs 1.

Vorteilhafte Weiterbildungen der Erfindung sind in Unteransprüchen angegeben.

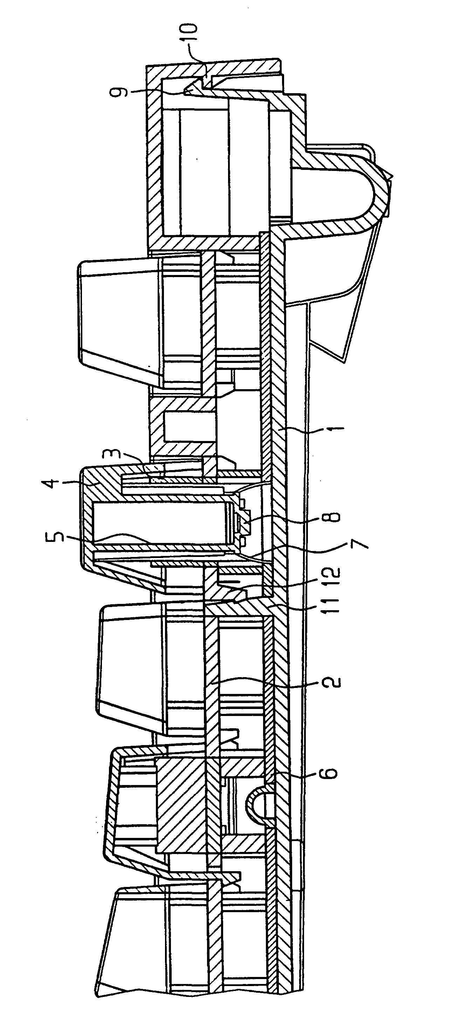

Im Folgenden wird ein Ausführungsbeispiel der Erfindung anhand der Zeichnung näher erläutert.

Die Figur zeigt in einer Schnittdarstellung einen Ausschnitt aus einem Tastaturgehäuse, das aus einer Bodenschale 1 und einer Oberschale 2 besteht. Die Oberschale 2 weist eine Vielzahl von Tastengehäusen 3 auf, in denen jeweils mit einer Tastenkappe 4 versehene Tastenstößel 5 axial geführt sind. In der Bodenschale 1 befindet sich eine Schaltmatte 6 mit federnden Druckorganen 7 in Form kuppelartiger Höcker. Im Inneren dieser kuppelartigen Höcker befindet sich jeweils ein Kontaktelement 8, das beim Drücken einer Taste durch die Einwirkung des Tastenstößels 5 auf das federnde Druckorgan 7 gegen ein Schaltelement auf der Schaltmatte 6 drückt und auf diese Weise einen Schaltvorgang auslöst.

Zur gegenseitigen Befestigung von Bodenschale 1 und Oberschale 2 sind an den jeweiligen Randbereichen von Bodenschale 1 und Oberschale 2 ineinandergreifende Rastelemente, beispielsweise in der Form von Schnapphaken 9 und Rastnasen 10, vorgesehen. Darüber hinaus sind zur verbesserten Lagefixierung von Bodenschale 1 und Oberschale 2 mehrere über die Fläche der Bodenschale 1 verteilte Rastkeile 11 vorgesehen, die jeweils lochartige Aussparungen in der Schaltmatte 6 durchdringen und bis zur Oberschale 2 reichen. Jedem Rastkeil 11 ist ein an der Oberschale 2 nach innen vorspringender Gegenkeil 12 zugeordnet, wobei Rastkeil 11 und Gegenkeil 12 derart versetzt nebeneinander angeordnet sind, dass sich die einander zugewandten Flächen von Rastkeil 11 und Gegenkeil 12 aufeinander zubewegen und federnd anschmiegen.

In der Endmontagestellung, das heisst bei befestigter Oberschale 2 an der Bodenschale 1, greifen schließlich Rastkeil 11 und Gegenkeil rastend ineinander. Zu diesem Zweck sind am Rastkeil 11 eine Rastmulde und am Gegenkeil 12 eine in diese Rastmulde eintauchende Rastnase vorgesehen. In dieser Endmontagestellung taucht auch das freie Ende des Rastkeils 11 in eine Aussparung in der Innenseite der Oberschale 12 ein, was zusätzlich zur gegenseitigen Lagefixierung von Bodenschale 1 und Oberschale 2 beiträgt.

## Patentansprüche

1. Tastaturgehäuse mit einer Bodenschale (1) und einer Oberschale (2), die mit der Bodenschale (1) sowohl über am Schalenrand vorgesehene Rastelemente, als auch über mehrere in der Bodenschale (2) räumlich verteilte und senkrecht zur Bodeninnenfläche stehende Rastkeile verbunden ist, wobei jedem Rastkeil (11) der Bodenschale (1) ein in der Oberschale (2) nach innen vorspringender Gegenkeil (12) zugeordnet ist, Rastkeil (11) und Gegenkeil (12) derart seitlich versetzt angeordnet sind, dass sich die aufeinander zubewegenden Keile mit ihren einander zugewandten Keilflächen federnd anschmiegen, und wobei Rastkeil (11) und Gegenkeil (12) in der Endstellung rastend ineinander eingreifen.
**dadurch gekennzeichnet,**
**dass** das freie Ende des Rastkeils (11) in eine Aussparung in der Oberschale (2) eintaucht.

2. Tastaturgehäuse nach Anspruch 1,
**dadurch gekennzeichnet,**
**dass** am Rastkeil (11) eine Rastmulde und am Gegenkeil (12) eine in der Endstellung in die Rastmulde eintauchende Rastnase vorgesehen sind.

## Claims

1. Keyboard housing with a bottom shell (1) and an upper shell (2), connected to the bottom shell (1) both by means of locking elements provided on the edge of the shell and by means of a plurality of locking wedges spatially distributed in the bottom shell (2) [sic] and perpendicular to the inner surface of the bottom, each locking wedge (11) of the bottom shell (1) being assigned an inwardly projecting mating wedge (12) in the upper shell (2), the locking wedge (11) and mating wedge (12) being arranged laterally offset in such a way that the wedges moving towards each other hug resiliently with their mutually facing wedge surfaces, and the locking wedge (11) and mating wedge (12) engaging in each other in a locking manner in the final position, **characterized in that** the free end of the locking wedge (11) enters a clearance in the upper shell (2).

2. Keyboard housing according to Claim 1, **characterized in that** a locking hollow is provided on the locking wedge (11) and a locking lug, entering the locking hollow in the final position, is provided on the mating wedge (12).

## Revendications

1. Boîtier de clavier ayant une coquille (1) de fond et une coquille (2) supérieure, qui est reliée à la coquille (1) de fond à la fois par des éléments d'encliquetage qui sont prévus sur le bord des coquilles et par plusieurs coins d'encliquetage répartis dans l'espace dans la coquille (2) de fond et perpendiculaires à la surface intérieure du fond, un coin (12) antagoniste en saillie vers l'intérieur dans la coquille (2) supérieure étant associé à chaque coin (11) d'encliquetage de la coquille (1) de fond, le coin (11) d'encliquetage et le coin (12) antagoniste étant décalés latéralement de façon à ce que les coins déplacés l'un sur l'autre s'épousent élastiquement par leurs surfaces cunéiformes tournées l'une vers l'autre et le coin (11) d'encliquetage et le coin (12) antagoniste pénétrant l'un dans l'autre en s'encliquetant en la position d'extrémité,
**caractérisé**
**en ce que** l'extrémité libre du coin (11) d'encliquetage pénètre dans un évidement de la coquille (2) supérieure.

2. Boîtier de clavier suivant la revendication 1,
**caractérisé**
**en ce qu'**il est prévu sur le coin (11) d'encliquetage une cuvette d'encliquetage et sur le coin (12) antagoniste un bec d'encliquetage pénétrant dans la cuvette d'encliquetage en la position d'extrémité.
